(19) Europäisches Patentamt
European Patent Office
Office européen des brevets

(11) **EP 2 921 460 A1**

(12) **EUROPEAN PATENT APPLICATION**
published in accordance with Art. 153(4) EPC

(43) Date of publication:
**23.09.2015 Bulletin 2015/39**

(51) Int Cl.:
**C03B 18/02** (2006.01)   **C03B 25/08** (2006.01)

(21) Application number: **13855435.7**

(86) International application number:
**PCT/JP2013/080941**

(22) Date of filing: **15.11.2013**

(87) International publication number:
**WO 2014/077371 (22.05.2014 Gazette 2014/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.11.2012   JP 2012252516**
**25.01.2013   JP 2013011655**

(71) Applicant: **Asahi Glass Company, Limited**
**Tokyo 100-8405 (JP)**

(72) Inventors:
• **ISHIKAWA, Yasunari**
  **Tokyo 100-8405 (JP)**
• **MATSUOKA, Mizuki**
  **Tokyo 100-8405 (JP)**
• **TANII, Shiro**
  **Tokyo 100-8405 (JP)**

(74) Representative: **Müller-Boré & Partner**
**Patentanwälte PartG mbB**
**Friedenheimer Brücke 21**
**80639 München (DE)**

(54) **GLASS PRODUCTION METHOD AND GLASS PRODUCTION APPARATUS**

(57)     [Solution] Provided is a glass production method including a forming step of forming a glass ribbon from molten glass by a glass forming means, and a conveying step of gradually cooling the glass ribbon to a temperature less than or equal to a strain point temperature of glass while conveying the glass ribbon by conveyance rolls, wherein the conveying step includes a buffer layer forming step of forming a buffer layer made of an inorganic salt by spraying a solution containing the inorganic salt directly onto at least a portion of the conveyance roll and causing the solution sprayed onto the conveyance roll to dry out.

FIG.2

EP 2 921 460 A1

**Description**

TECHNICAL FIELD

The present invention relates to a glass production method and a glass production apparatus.

BACKGROUND ART

Methods of producing a flat glass include conveying a glass ribbon that has been formed from molten glass by a float process or the like by conveyance rolls within an annealing furnace and gradually cooling the glass ribbon in order to prevent cracking or a decrease in flatness of the glass ribbon due to rapid contraction, for example.

Upon conveying the glass ribbon in this manner, when the surface of the conveyance roll is uneven due to a scratch or some extraneous matter attached thereto, defects may occur on the surface of the glass ribbon that comes into contact with the conveyance roll.

In view of the above, conventionally, an anti-defect protective layer is formed on the surface of the glass ribbon by introducing $SO_2$ gas (sulfur dioxide, sulfurous acid gas) into the annealing furnace or blowing $SO_2$ gas onto the surface of the glass ribbon facing the conveyance rolls and causing a reaction between the $SO_2$ and Na on the glass ribbon surface that is at a high temperature. Further, the anti-defect protective layer on the glass ribbon surface is transferred onto the surface of the conveyance roll to form a buffer layer (see e.g., Patent Documents 1-5). Also, a buffer layer made of a carbon film may be formed on the surface of the conveyance roll (see e.g., Patent Document 6).

PRIOR ART DOCUMENTS

PATENT DOCUMENTS

Patent Document 1: WO 2009/148141
Patent Document 2: WO 2002/051767
Patent Document 3: Japanese Laid-Open Patent Publication No. 2011-121834
Patent Document 4: Japanese Laid-Open Patent Publication No. 2011-251893
Patent Document 5: Japanese Laid-Open Patent Publication No. 2009-227471
Patent Document 6: WO 2009/014028

SUMMARY OF THE INVENTION

PROBLEM TO BE SOLVED BY THE INVENTION

However, according to the techniques disclosed in Patent Documents 1-5, it takes time for the $SO_2$ gas and the Na on the glass ribbon surface to react with each other to form the anti-defect protective layer and the buffer layer. Thus, defects could be formed on the glass ribbon surface as a result of the glass ribbon coming into contact with the conveyance roll before the anti-defect protective layer and/or the buffer layer are adequately formed, and the yield would decrease as a result. Also, according to the technique of Patent Document 6, a carbon film can only form a buffer layer with a height of several micrometers ($\mu$m), and as such, not all convex defects could be adequately covered by the buffer layer. Thus, the occurrence of defects on the surface of the glass ribbon cannot be adequately suppressed.

The present invention has been conceived in view of the above problems of the prior art, and it is an object of the present invention to provide a glass production method that is capable of suppressing the occurrence of defects on the surface of a glass ribbon and increasing the yield.

MEANS FOR SOLVING THE PROBLEM

To solve the above problems, according to one embodiment of the present invention, a glass production method is provided that includes a forming step of forming a glass ribbon from molten glass by a glass forming means, and a conveying step of gradually cooling the glass ribbon to a temperature less than or equal to a strain point temperature of glass while conveying the glass ribbon by conveyance rolls. The conveying step includes a buffer layer forming step of forming a buffer layer made of an inorganic salt by spraying a solution containing the inorganic salt directly onto at least a portion of the conveyance roll and causing the solution sprayed onto the conveyance roll to dry out.

ADVANTAGEOUS EFFECT OF THE INVENTION

According to the glass production method of the present invention, the occurrence of defects on the surface of a glass ribbon may be prevented and the yield may be increased.

BRIEF DESCRIPTION OF THE DRAWINGS

FIG. 1 is a diagram illustrating a glass production process according to an embodiment of the present invention;
FIG. 2 is a diagram of illustrating a buffer layer forming step according to an embodiment of the present invention;
FIG. 3 is a diagram illustrating other configuration examples of a conveying step and a buffer layer forming step according to an embodiment of the present invention;
FIG. 4 is a flowchart illustrating a glass production method according to an embodiment of the present invention;
FIG. 5 is a schematic diagram illustrating a test apparatus used for evaluating Experimental Examples 1 and 2;
FIG. 6 illustrates photographs of an inner peripheral side and an outer peripheral side of a flat glass of Experimental Example 1; and
FIG. 7 illustrates photographs of an inner peripheral side and an outer peripheral side of a flat glass of Experimental Example 2.

EMBODIMENTS FOR IMPLEMENTING THE INVENTION

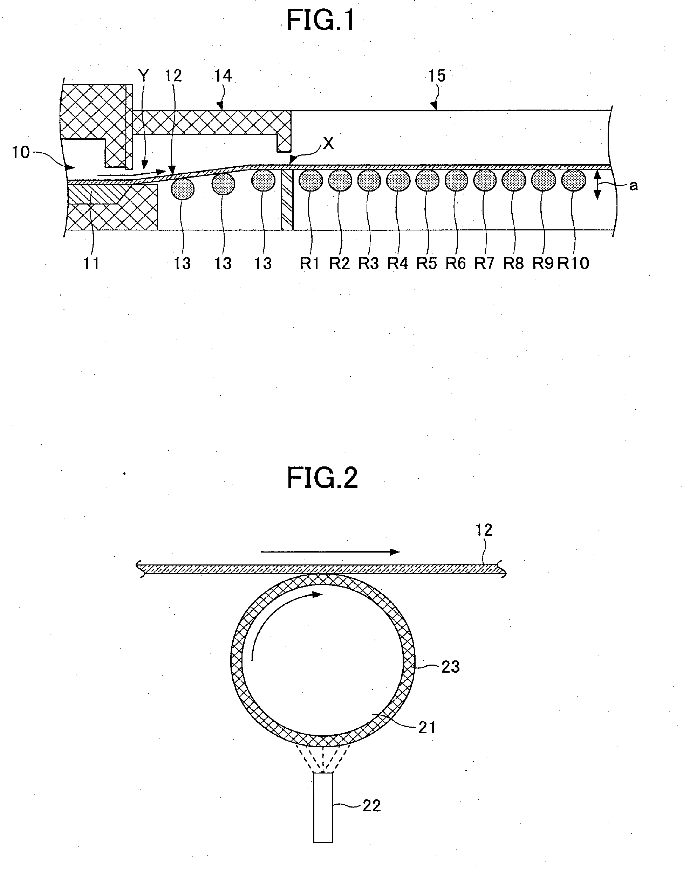

In the following, embodiments of the present invention are described with reference to the accompanying drawings. Note, however, that the present invention is not limited to the embodiments described below, and various modifications and changes may be made to these embodiments without departing from the scope of the present invention.
An exemplary configuration of a glass production method according to an embodiment of the present invention is described below.
First, a glass production method using a float process is described as an example of a glass production process with reference to FIG. 1. Note that although a glass production method using a float process is described as an example, the glass production method of the present invention is not limited to a flat glass production method using the float process but may be any glass production method that includes conveying a glass ribbon by conveyance rolls after a forming step. Other examples include glass production methods using a roll-out process or a fusion process.
As illustrated in FIG. 1, molten glass is continuously supplied onto a molten metal 11 of a float bath 10, and a glass ribbon 12 is formed on the molten metal 11 (forming step). In the present embodiment, the float bath 10 corresponds to a glass forming means. Although not shown, the molten glass may be obtained by melting glass raw materials in a raw material melting step at the upstream side of FIG. 1, and further performing a degassing process or the like, for example.
Then, the glass ribbon 12 is drawn from an exit port of the float bath 10 to the exterior of the float bath 10. The drawing of the glass ribbon 12 from the molten metal 11 is carried out by lifting out the glass ribbon by lift-out rolls 13 (conveyance rolls) at the exit port of the float bath 10. Note that the region where the lift-out rolls 13 are located is referred to as a dross box 14.
The glass ribbon that is drawn out of the float bath is gradually cooled to a temperature less than or equal to a strain point temperature of glass while being conveyed on conveyance rolls R1-R10 within an annealing furnace 15 in order to prevent cracking and a decrease in flatness of the glass ribbon due to rapid contraction, for example. After being gradually cooled (annealed), the glass ribbon is cut into a desired size if necessary.
In the present embodiment, a step of conveying the glass ribbon (flat glass) by the conveyance rolls including the lift-out rolls is referred to as a conveying step. Note that although the lift-out rolls and the conveyance rolls within the annealing furnace are illustrated in FIG. 1, the conveying step of the present embodiment is not limited to the conveying step using the lift-out rolls or the conveying rolls as illustrated in FIG. 1. That is, the conveying step may be any process step that involves conveying a glass ribbon or a flat glass using lift-out rolls or conveyance rolls that are arranged downstream of the exit port of the glass forming means and are used for conveying the glass ribbon or the flat glass.
Upon conveying a glass ribbon by the lift-out rolls 13 and the conveyance rolls R1-R10 (also collectively referred to as "conveyance roll" hereinafter), when the surface of the conveyance roll has an uneven portion (e.g., a portion having a convex shape with a sharp edge) due to a scratch or extraneous matter attached thereto, for example, because the conveyance roll comes into contact with the bottom surface of the glass, defects may be generated on the glass surface depending on the shape of the uneven portion. According to an aspect of the glass production method of the present embodiment, the occurrence of defects on a glass surface may be prevented even in a case where the surface of a conveyance roll has such an uneven portion, and the yield may be increased. The glass production method of the present embodiment is described below.

In the glass production method according to the present embodiment, the conveying step includes a buffer layer forming step that involves directly spraying an inorganic salt solution, which is obtained by mixing an inorganic salt corresponding to a material of the buffer layer in a solvent, onto at least a portion of the conveyance roll that is being rotated. The solvent of the inorganic salt solution sprayed onto the conveyance roll vaporizes and dries up under a high temperature atmosphere after the forming step, and in this way, a buffer layer made of an inorganic salt may be formed on a predetermined location of the conveyance roll in a short period of time. Note that the formation of a buffer layer on a conveyance roll according to a conventional method takes time because it involves the transfer of an anti-defect protective layer formed on a glass ribbon surface onto the conveyance roll. However, by directly spraying an inorganic salt solution onto the conveyance roll as in the method described above, a buffer layer may be formed on the conveyance roll in a very short period of time. Also, because it is possible to form a buffer layer without interrupting a glass production process, the present method may be advantageous in terms of productivity as well.

A specific example of the buffer layer forming step is described below with reference to FIG. 2.

FIG. 2 is a cross-sectional view of a process of spraying a solution (dispersion liquid) containing an inorganic salt corresponding to the material of the buffer layer from a (buffer layer raw material solution) supply nozzle 22.

According to the present method, the buffer layer raw material solution may be uniformly supplied to the surface of the conveyance roll 21, and in this way, a uniform buffer layer may be formed on a desired portion of the conveyance roll. Also, because the buffer layer raw material solution supplied to the conveyance roll surface evaporates, the material of the buffer layer may be deposited on the conveyance roll, and a buffer layer 23 with high adhesion to the conveyance roll may be formed.

Further, even during a glass production process, the supply nozzle 22 may be moved to a desired position of the conveyance roll, and the buffer layer raw material solution may be sprayed to form a uniform buffer layer. In this way, the present method may be carried out without interrupting the glass production process.

Note that the buffer layer forming method of the present embodiment may also be performed during a time the glass production process is not performed.

In the case of forming a buffer layer in the above-described manner, the supply nozzle 22 is preferably configured to be movable in the length direction of the glass conveyance roll 21 (direction perpendicular to the plane of FIG. 2). With such a configuration, a buffer layer may be formed at a desired portion of the conveyance roll 21 at a desired width. Also, a buffer layer surface press member or the like may be arranged such that the surface shape of the buffer layer may be adjusted after the solution containing the material of the buffer layer (dispersion liquid) has been sprayed and before the buffer layer comes into contact with glass.

By implementing the buffer layer forming step, a defect may be prevented from occurring on a glass ribbon that comes into contact with the conveyance roll after a forming step; that is, a buffer layer may be formed on at least a portion of a conveyance roll arranged downstream of the exit port of the float bath 10 corresponding to the glass forming means to prevent the occurrence of a defect. Note that the shape of the buffer layer is not particularly limited and may be arranged into any suitable shape for preventing the occurrence of a defect.

Although the material of the buffer layer is not particularly limited, it is important to use a material that is capable of adequately covering an uneven portion on a conveyance roll surface and preventing the occurrence of a defect on a glass being conveyed.

In particular, to prevent the occurrence of a defect or the alteration of a glass ribbon being conveyed, the buffer layer preferably includes a material that does not react with the glass ribbon at the temperature at which the glass ribbon is conveyed and the Mohs hardness of the material is preferably lower than the Mohs hardness of the glass ribbon. Such a material is preferably included in the buffer layer, more preferably as a main component of at least the substance constituting a surface portion of the buffer layer, and more preferably as a main component of the substance constituting the buffer layer. Note that the above Mohs hardness of the glass ribbon refers to the Mohs hardness of the glass ribbon at room temperature. Thus, the Mohs hardness of the material contained in the buffer layer is preferably less than or equal to 6.5, and more preferably less than or equal to 4.5.

Also, the material of the buffer layer is preferably made of an inorganic salt, particularly one or more substances selected from a group constituting sulfates, carbonates, and fluorides. Because these materials have a buffer function, they may be particularly suitable for preventing the occurrence of a defect on the glass ribbon by being interposed between the glass ribbon and the conveyance roll. Of these materials, the buffer layer preferably contains a sulfate and/or a carbonate owing to their stability even upon coming into contact with the glass ribbon that is at a high temperature. Note that the buffer layer may contain an organic salt as a sub-component.

The solvent to be mixed with the inorganic salt is not particularly limited as long as it evaporates after being sprayed onto the conveyance roll. For example, water or an organic solvent may be used.

Further, the buffer layer formed on the conveyance roll preferably includes a water-soluble substance.

In some cases, a portion of the buffer layer formed at a predetermined location of the conveyance roll may peel off upon coming into contact with a glass ribbon and adhere to the glass surface, and such a portion of the buffer layer has to be removed at least before the glass is shipped. Arranging the buffer layer to include a water-soluble substance may be advantageous in that the material of the buffer layer adhered to the glass surface may be removed by simply cleaning the glass surface with water. In the case where the buffer layer includes a water-soluble substance, at least a portion of the buffer layer that comes into contact with the glass ribbon, namely, a surface portion of the buffer layer, preferably includes a water-soluble substance, and more preferably, a water-soluble substance constitutes a main component of at least the surface portion of the buffer layer.

In particular, the buffer layer preferably contains sodium sulfate. This is because sodium sulfate has a buffering function and may be particularly suitable for preventing the occurrence of a defect on a glass ribbon by being interposed between the glass ribbon and the conveyance roll. Also, sodium sulfate may be advantageously used because it does not easily react with glass, has a low Mohs hardness, and is water-soluble. As such, sodium sulfate is preferably contained in the buffer layer as described above. More preferably, sodium sulfate constitutes the main component of at least the surface portion of the buffer layer, and more preferably the main component of the buffer layer.

Note that in the above descriptions, "main component" means that the component is contained at a mass percentage greater than or equal to 70 mass%.

As another exemplary configuration of a glass production method of the present embodiment, the conveying step preferably includes a defect occurrence location detection step of detecting a defect in glass that has been gradually cooled (annealed) and determining the defect occurrence location of the defect, and a target roll identification step of identifying a target roll corresponding to the conveyance roll that has caused the defect occurrence. The buffer layer forming step is preferably performed to form a buffer layer within a buffer layer forming region including a portion of the target roll identified by the target roll identification step corresponding to the defect occurrence location detected by the defect occurrence location detection step.

In the following, the defect occurrence location detection step and the target roll identification step are described with reference to FIGs. 1-3.

First, the defect occurrence location detection step is described below.

The defect occurrence location detection step involves detecting a defect in a glass after it has been gradually cooled. The method of detecting a defect is not particularly limited as long as a defect that is greater than a tolerated size can be detected in a glass to be produced. For example, light may be incident on a glass surface, and at this time, optical changes occurring as a result of a defective portion (e.g., shadow or reflection of light) may be imaged by an optical element such as a line sensor, and the size and position of the defect may be detected based on the obtained image.

The defect occurrence detection step may be performed with respect to a glass that has been gradually cooled, and the glass may be in the form of a glass ribbon or a glass plate that has been cut. That is, a glass that has been gradually cooled as recited in the claims is not limited to glass in the form of a glass ribbon. However, because a defect may occur during a cutting process and the yield can be improved by detecting a defect at an earlier stage, the defect occurrence detection step is preferably performed on glass in the form of a glass ribbon (in a state before being cut).

In a case where a defect is detected in the defect occurrence location detection step, a position of the defect with respect to the width direction of the glass is recorded, and such position information is used in the buffer layer forming step.

Next, the target roll identification step is described below.

This step involves identifying a target roll corresponding to the conveyance roll that has caused the defect occurrence, that is, the conveyance roll on which the buffer layer is to be formed.

After a glass (glass ribbon) undergoes the forming step, the glass is conveyed on a plurality of conveyance rolls. The defect detected by the above defect occurrence location detection step may be presumed to have been created as a result of the glass passing the target roll having an uneven portion due to a scratch or extraneous matter on its surface. In the glass production method according to the present embodiment as described herein, the above-described buffer layer forming step is implemented to form a buffer layer on the uneven portion of the target roll. Accordingly, the present step corresponds to a step of identifying (detecting) the target roll having the uneven portion.

The specific procedures of this step is not particularly limited as long as the target roll having the uneven portion that has caused the defect occurrence as described above can be identified.

Referring to FIG. 1 as an example, an exemplary method of identifying the target roll having the uneven portion that has caused the defect occurrence is described below.

A method of identifying the target roll having the uneven portion may involve configuring the conveyance rolls R1-R10 to be displaceable in the height direction (direction of arrow "a" in the figure), altering the conveyance rolls that come into contact with a glass ribbon, and determining whether a defect has occurred on the glass ribbon.

For example, as specific procedures, first, the positions of the odd-numbered conveyance rolls (R1, R3···) may be lowered such that only the even-numbered conveyance rolls come into contact with the glass ribbon. A glass production process may be performed in such a state, and if a defect does not occur in the glass, it may be presumed that the uneven portion that has caused the defect exists in the odd-numbered conveyance rolls. If a defect occurs, it may be presumed that the uneven portion that has caused the defect exists in the even-numbered conveyance rolls.

In a similar vein, for example, if it is determined at the above stage that the uneven portion exists in the odd-numbered conveyance rolls, similar procedures may be conducted to identify the target roll having the uneven portion among the odd-numbered conveyance rolls. That is, only a selected number of the odd-numbered conveyance rolls may be arranged to not be in contact with the glass ribbon, and an inspection may be made as to whether a defect has occurred in the glass. If a defect does not occur, it may be presumed that the uneven portion exists in the conveyance rolls that are not in contact with the glass ribbon. Also, if a defect occurs, it may be presumed that the uneven portion exists in the odd-numbered conveyance rolls that are in contact with the glass ribbon.

By repeating such procedures, the target roll having the uneven portion that has caused the defect may be identified.

Note that as for the method used to detect whether a defect has occurred in the glass upon altering the conveyance rolls that come into contact with the glass, a method similar to that described in connection with the defect occurrence location detection step may be used. Note also that although the target roll identification step is described above with respect to a case where the conveyance rolls R1-R10 are subjected to the identification process, the lift-out rolls 13 may also be subjected to the target roll identification step. Even in such a case, the target roll may be identified using methods and procedures similar to those described above.

In the following, the buffer layer forming step that is performed in conjunction with the defect occurrence location detection step and the target roll identification step is described.

The buffer layer forming step involves forming a buffer layer within a buffer layer forming region including a portion of the target roll identified by the target roll identification step corresponding to the defect occurrence location detected by the defect occurrence location detection step.

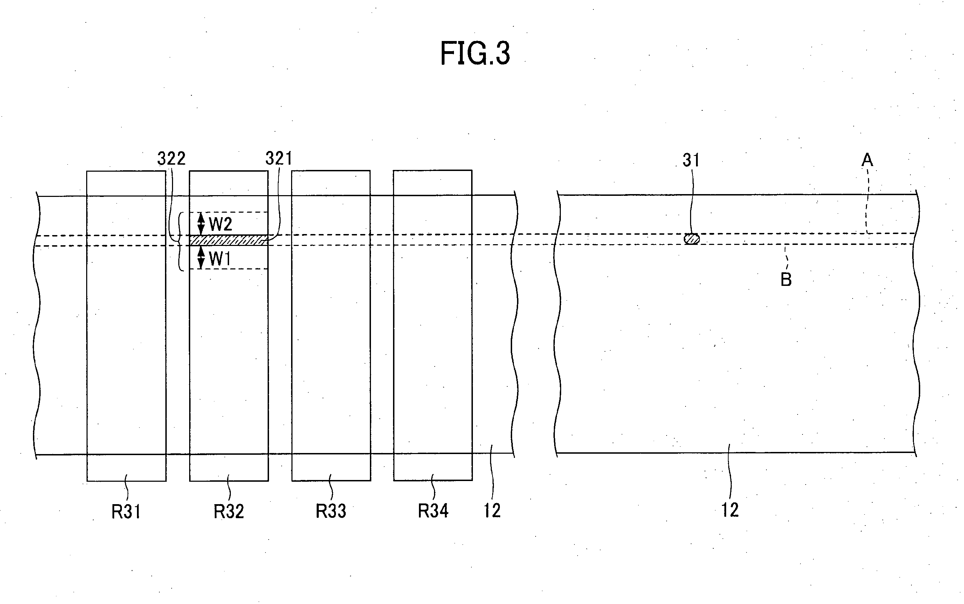

The buffer layer forming step is described below with reference to FIG. 3. The left side of FIG. 3 is a top view of the glass (glass ribbon) 12 being conveyed by a plurality of conveyance rolls R31-R34. The right side of FIG. 3 is a top view of an occurrence of a defect 31 on the glass (glass ribbon) 12 detected in the defect occurrence location detection step after an annealing step.

First, in the defect occurrence location detection step, when the defect 31 is detected, it can be determined that an uneven portion (e.g. scratch or extraneous matter) that has caused the defect occurrence exists on the surface of one of the conveyance rolls R31-R34 within a portion between dotted line A and dotted line B corresponding to the position of the defect 31.

Then, in the target roll identification step, when the conveyance roll R32 is identified as the target roll having the uneven portion that has caused the defect, for example, it may be determined that the uneven portion is located within a portion 321 between the dotted line A and the dotted line B of the conveyance roll 32. That is, the portion 321 corresponds to the defect occurrence location detected by the defect occurrence location detection step of the conveyance roll identified by the conveyance roll identification step.

Thus, in the present step, a buffer layer is formed by the method described above within a region including the portion 321 to thereby prevent a defect from occurring on a glass that comes into contact with the portion.

Note that the shape of the buffer layer is not particularly limited as long as the buffer layer is arranged into a suitable shape for covering the uneven portion that has caused the defect occurrence and thereby preventing the detected defect from occurring.

Also, the range over which the buffer layer is to be formed is not particularly limited as long as the buffer layer is formed within a buffer layer forming region including the portion 321 of the target roll identified by the target roll identification step corresponding to the defect occurrence location detected in the defect occurrence location detection step as described above.

For example, the buffer layer is preferably arranged into a strip provided around the circumferential surface of the target roll over at least the portion 321 corresponding to the defect occurrence location (according to the width of the defect). In this case, a single strip of the buffer layer or multiple strips of the buffer layer may be provided.

However, in consideration of the tendency of the buffer layer to be less susceptible to peeling when it has a certain degree of width, and also in consideration of the detection accuracy of the defect occurrence location detecting means, the buffer layer is preferably formed over a range that is wider than the portion corresponding to the defect occurrence location detected by the defect occurrence location detection step. In particular, the buffer layer forming region in which the buffer layer is formed is more preferably within a range extending at least $\pm$ 50 mm in the axis direction of the target roll beyond the portion corresponding to the defect occurrence location.

Such an aspect is described below with reference to FIG. 3. A range extending at least $\pm$ 50 mm in the axis direction of the target roll beyond the portion 321 corresponding to the defect occurrence location of the predetermined target roll that has been identified means that the lengths of W1 and W2 representing the distances from two side edges of the portion 321 corresponding to the defect occurrence location of the target roll of FIG. 3 are greater than or equal to 50 mm. Thus, in the case of FIG. 3, the buffer layer is preferably formed over a range of at least width 322.

Even in the case where the buffer layer is formed over a width greater than the width of the defect, the buffer layer with the above-described width is preferably formed around the circumferential surface of the conveyance roll.

Note that in view of preventing defects in the first place, the buffer layer may be formed on the conveyance roll beforehand. In this case, the buffer layer forming range is not particularly limited as long as the buffer layer is formed at a certain location. However, in this case, the width of the buffer layer that is formed on the conveyance roll is preferably greater than or equal to 85% of the width of the conveyance roll that comes into contact with glass. Although the upper limit value of the width of the buffer layer is not particularly limited, for example, the width of the buffer layer may be less than or equal to 100% of the width of the conveyance roll that comes into contact with glass.

Also, even during a glass production process, an uneven portion on a conveyance roll may be detected by the above-described method, and the supply nozzle 22 as illustrated in FIG. 2 may be moved to a peripheral area including the uneven portion to form a uniform buffer layer by spraying the buffer layer raw material on the uneven portion. In this way, the buffer layer forming step may be carried out without interrupting the glass production process.

As has been described so far, in the case where the defect occurrence location detection step and the target roll identification step are performed in the glass production method according to the present embodiment, a defect may be detected on a glass surface, and a buffer layer may be formed on the corresponding portion of the conveyance roll that has caused the defect. In this way, a defect occurrence may be more reliably prevented. Also, because the occurrence of a defect on a glass surface can be prevented, the yield may be increased.

Also, the conveying step of the glass production method according to the present embodiment preferably includes a protective layer forming process step of forming an anti-defect protective layer on a glass ribbon surface by blowing $SO_2$ gas onto a glass ribbon surface facing the conveyance rolls.

In the case of performing the protective layer forming process step, if the above-described defect occurrence location detection step and the target roll identification step are also performed, the target roll identification step preferably involves identifying the target roll from the conveyance rolls that are arranged within 3 m downstream of the exit port of the glass forming means. More preferably, the target roll is identified from the conveyance rolls that are arranged within 1.5 m downstream of an exit port of the dross box.

A method of forming an anti-defect protective layer on a glass ribbon surface by bringing $SO_2$ gas (sulfurous acid gas, sulfur dioxide) in contact with the glass ribbon is known as a method for preventing or suppressing the occurrence of a defect on the glass ribbon surface upon conveying the glass ribbon by conveyance rolls. The method involves blowing $SO_2$ gas onto the glass ribbon surface facing the conveyance rolls at the time annealing is performed, preferably right after the forming step, to thereby form an anti-defect protective layer on the glass ribbon surface.

Note that such a method of forming an anti-defect protective layer on the glass ribbon surface using $SO_2$ gas may be implemented in combination with the glass production method according to the present embodiment.

Although a range of the glass ribbon surface over which the $SO_2$ gas is to be blown is not particularly limited, the $SO_2$ gas is preferably blown onto a region where the temperature of the glass being conveyed is greater than or equal to 500 °C. By blowing the $SO_2$ gas within such a range, the anti-defect protective layer may be easily formed. Accordingly, the $SO_2$ gas is preferably blown immediately after the glass ribbon is taken out of the glass forming means via the exit port, for example. That is, in the case of FIG. 1, the $SO_2$ gas is preferably sprayed onto a glass (glass ribbon) that passes a region located immediately after the exit port of the float bath 10 as indicated by "Y" in the figure, or a region located immediately after the dross box 14 (exit port) as indicated by "X" in the figure. For example, the $SO_2$ gas is preferably blown onto a region within 1.0 m of the dross box. More preferably, the $SO_2$ gas is blown onto a region within 0.7 m of the dross box.

By forming an anti-defect protective layer on a glass ribbon surface by having $SO_2$ gas come into contact with the glass ribbon, the anti-defect protective layer on the glass ribbon surface may be transferred onto a conveyance roll to form a buffer layer on the conveyance roll. In this way, the buffer layer may be formed over a wide range on the surface of the conveyance roll arranged at the downstream side, and a defect may be further prevented from occurring in a glass to be produced.

Note, however, that because it takes time to form the anti-defect protective layer on the glass ribbon, it may be difficult to form a buffer layer by transferring the anti-defect protective layer on a conveyance roll arranged at the upstream side. In the case such a protective layer forming process step is performed, and the target roll identification step as described above is performed, the target roll is preferably identified from conveyance rolls that are arranged within a range from the exit port of the glass forming means up to a conveyance roll on which the anti-defect protective layer formed by the reaction between $SO_2$ gas and the glass ribbon is transferred to form a buffer layer thereon.

Specifically, although the formation of the anti-defect protective layer may depend on various factors such as the reaction conditions and conveying speed of the glass ribbon, usually, the anti-defect protective layer may be formed by the reaction between $SO_2$ gas and the glass ribbon surface at a portion 3 m away from the exit port of the glass forming means, particularly, a portion 1.5 m away from the exit port of the dross box. Accordingly, in the target roll identification step, preferably, only conveyance rolls arranged within 3 m downstream of the exit port of the glass forming means are subjected to inspection for an uneven portion. More preferably, only conveyance rolls arranged within 1.5 m downstream of the exit port of the dross box are subjected to inspection for an uneven portion. Note that the distance from the exit port of the glass forming means refers to the distance from the exit port of a float bath in the case where the glass forming means implements a float process, for example.

With such a configuration, conveyance rolls that are subjected to the target roll identification step (conveyance rolls to be inspected) may be further restricted. Accordingly, the target roll having an uneven portion on its surface may be identified at an earlier stage, and the productivity and yield may be increased as a result.

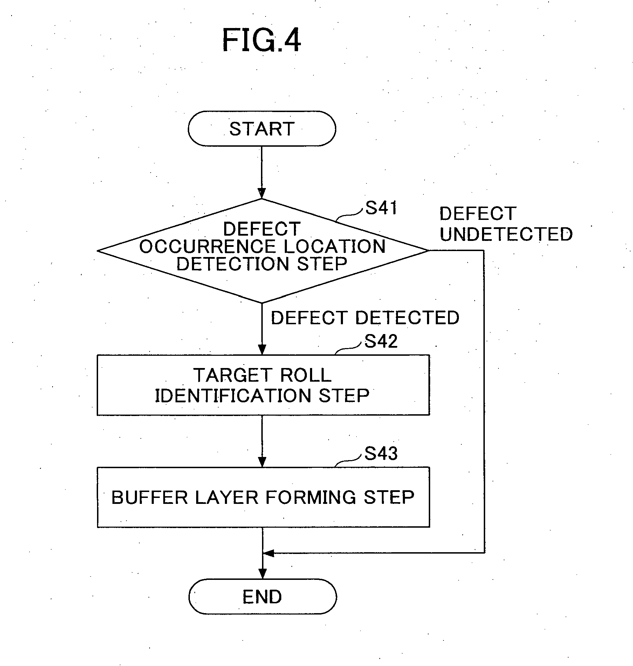

The various steps of the glass production method according to the present embodiment have been described above. Note that in the case where the above-described defect occurrence location detection step and the target roll identification step are performed in the glass production method of the present embodiment, the process steps may be carried out according to the flowchart shown in FIG. 4.

First, the flow as illustrated in FIG. 4 is started at a predetermined timing. The start timing is not particularly limited and may be set up in advance to have the flow started each time a predetermined time or a predetermined amount of production is reached, for example. Also, in a case where inspection for defects in a glass product (glass ribbon) is continuously performed, it may be assumed that the present flow is implemented on a constant basis.

First, the above-described defect occurrence location detection step represented by step S41 is performed. If a defect is not detected within a predetermined detection time in this process step, the present flow is ended. If a defect is detected, the process moves on to step S42 where the target roll identification step is performed. After identifying the target roll having an uneven portion such as a scratch or the like, the process moves on to step S43.

In step S43, a buffer layer is formed on a portion corresponding to the defect occurrence location detected in step S41 of the target roll identified in step S42.

After the buffer layer is formed, the present flow is ended.

In the glass production method of the present embodiment as described above, a solution containing an inorganic salt is directly sprayed onto a conveyance roll and the solution that is adhered to the conveyance roll is dried to form an inorganic salt buffer layer. In this way, a defect may be prevented from occurring on a glass surface.

In the following, a configuration example of a glass production apparatus of the present invention is described.

A glass production apparatus according to an embodiment of the present invention may have the following configuration, for example.

The glass production apparatus may include a float bath that forms a glass ribbon on molten metal, and a dross box arranged adjacent to the float bath and including lift-out rolls for lifting out the glass ribbon. Further, a conveyance roll having a buffer layer formed by drying a solution containing inorganic salt may be provided adjacent to the dross box, and an annealing furnace that gradually cools the glass ribbon to a temperature less than or equal to the strain point temperature of glass while conveying the glass ribbon by the conveyance rolls may be provided.

Specifically, the glass production apparatus may have the configuration as illustrated in FIG. 1, for example. As described above, in FIG. 1, the float bath 10 that forms the glass ribbon 12 on the molten metal 11 is provided. The dross box 14 with lift-out rolls 13 for lifting out the glass ribbon 12 is arranged adjacent to the float bath 10. Further, the annealing furnace 15 is arranged adjacent to the dross box 14, and the annealing furnace 15 can gradually cool the glass ribbon 12 to a temperature less than or equal to the strain point temperature of glass while conveying the glass ribbon 12 by the conveyance rolls R1-R10.

Note that a conveyance roll arbitrarily selected from the conveyance rolls R1-R10 arranged within the annealing furnace 15 may include a buffer layer (not shown) formed by drying a solution containing an inorganic salt. Note that the buffer layer may be formed on a conveyance roll other than the conveyance rolls R1-R10 within the annealing furnace 15 such as the lift-out rolls 13 within the dross box 14. Also, in some cases, the buffer layer may not be formed on any of the conveyance rolls R1-R10, and the buffer layer may instead be formed on a lift-out roll arbitrarily selected from the lift-out rolls 13, for example.

As described above, the buffer layer may be formed by spraying a solution or a dispersion liquid containing an inorganic salt from a supply nozzle onto the surface of a conveyance roll and drying the solution or dispersion liquid, for example. Thus, the glass production apparatus of the present embodiment is preferably provided with a supply nozzle for spraying the solution containing an inorganic salt onto the conveyance roll. Note that the configuration of the supply nozzle, the specific methods of forming the buffer layer, and the configuration of the buffer layer may be similar to those described in connection with the glass production method of the present embodiment, for example, and as such, descriptions thereof are hereby omitted.

Also, a glass (glass ribbon) that has undergone a forming process is conveyed on a plurality of conveyance rolls, and when it passes a conveyance roll that has an uneven portion due to a scratch or extraneous matter on its surface, the glass may presumably have a defect. Accordingly, in the glass production apparatus of the present embodiment, a buffer layer may be formed on a portion of the conveyance roll causing the defect occurrence corresponding to the defect occurrence location of the conveyance roll, that is, a region including the uneven portion.

In this respect, the glass production apparatus of the present embodiment may include a defect detection means for detecting a defect in a glass that has been gradually cooled. The defect detection means is not particularly limited as long as it is capable of detecting a defect that is greater than a tolerated size in the glass to be produced. For example, light may be incident on the glass surface, optical changes resulting from a defective portion (e.g., shadow or light reflection) may be imaged by an optical element such as a line sensor, and the size and position of the defective portion may be detected based on the obtained image. Note that although the installation position of the defect detection means is not particularly limited, in a case where a glass cutting means (described below) is provided, the defect detection means is preferably provided at the upstream side of the glass cutting means.

Thus, a buffer layer may be formed on a portion corresponding to the defect occurrence location of the conveyance roll that has been detected by the defect detection means as the cause of the defect. Note that means for identifying the conveyance roll that has caused a defect occurrence based on the location of the defect detected by the defect detection means and forming a buffer layer on a portion corresponding to the defect occurrence location of the conveyance roll has been described above in connection with the glass production method of the present embodiment, and as such, descriptions thereof are hereby omitted. Note that to detect the defect occurrence location of the conveyance roll, for example, the lift-out rolls 13 and/or the conveyance rolls R1-R10 may be configured to be displaceable in the height direction.

Note that the glass production apparatus of the present embodiment is not limited to the above configuration, but may be provided with a variety of other features. Specifically, for example, a raw material melting means for melting the glass raw material to produce molten glass may be provided at the upstream side of the float bath 10 of FIG. 1, and further, a degassing treatment means or the like for removing gas within the molten glass may be provided.

Also, glass cutting means or the like for cutting the glass ribbon into a flat glass of a desired size may be provided at the downstream side of the conveying direction of the glass ribbon 12. Further, a $SO_2$ blowing means for blowing $SO_2$ gas onto a glass ribbon surface facing the conveyance rolls may be provided in the dross box 14 or the annealing furnace 15, for example.

The glass production apparatus of the present embodiment may suitably implement the glass production method as described above. The glass production apparatus of the present embodiment may also have a configuration other than that described above to implement aspects of the glass production method as described above, for example.

Note, also, that although a glass production apparatus implementing a float process is described above as an example, the present invention is not limited to the above embodiment. For example, a glass production method according to an embodiment of the present invention may be a glass production apparatus implementing the roll-out method or the fusion method that includes a glass ribbon conveying means for conveying a glass ribbon by conveyance rolls that are provided downstream of a glass forming means, wherein a buffer layer is formed by drying a solution containing an inorganic salt on at least a portion of the conveyance roll.

In the glass production apparatus of the present embodiment as described above, a buffer layer is formed by drying a solution containing an inorganic salt on the conveyance roll, and in this way, a defect may be prevented from occurring on a glass surface.

EXAMPLES

In the following, exemplary methods of coating the buffer layer made of an inorganic salt according to the present invention are described in greater detail with respect to experimental examples.

[Experimental Example 1]

First, a roll base material made of stainless steel (SUS310 equivalent, for high temperatures) containing Cr at approximately 25 mass% and Ni at approximately 20 mass% was prepared. For the sake of convenience upon using the roll base material in a test described below, the shape of the roll base material was arranged into a disk shape with an outer diameter of 150 mm and a thickness of 20 mm (150 mm × 20 mm), and the radial cross-section of the outer peripheral surface of the roll was arranged into a outwardly convex curved surface with the radius of curvature of the curved surface being 50 mm. The outer peripheral surface of the roll was manually polished using water-resistant paper. The surface roughness (Ra) after polishing was 0.5 $\mu$m.

Such a roll was used to perform the defect evaluation test described below.

[Experimental Example 2]

In a manner similar to Experimental Example 1, in Experimental Example 2, a roll base material made of stainless steel containing Cr at approximately 25 mass% and Ni at approximately 20 mass% was used, and the outer peripheral surface of the roll was manually polished. The surface roughness (Ra) after polishing was 0.5 $\mu$m.

Then, the roll was heated to 300 °C, and an aqueous solution of sodium sulfate dissolved in distilled water at 10 mass% was sprayed at 20 cc/min onto the outer peripheral surface of the roll. Because the temperature of the roll was above 100 °C, the moisture of the sprayed aqueous solution evaporated and only the sodium sulfate remained on the outer peripheral surface of the roll thereby forming a film. Upon measuring the thickness of the sodium sulfate film formed on the outer peripheral surface of the roll using a electromagnetic coating tester (manufactured by Kett Electric Laboratory), the thickness was 100 μm.

Such a roll was used to conduct the defect evaluation test described below.

[Defect Evaluation]

To evaluate the effects of the inorganic salt buffer layer formed on the roll surface, the defect suppressing effect on a glass plate at a high temperature was evaluated in the following manner.

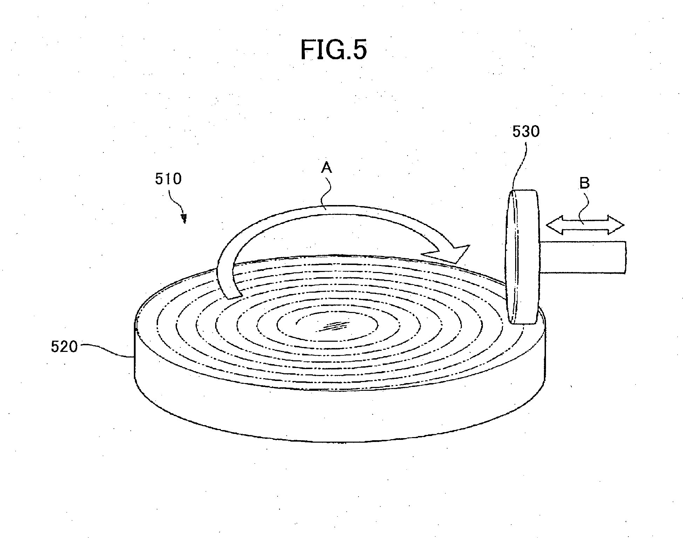

FIG. 5 is a schematic diagram illustrating a test apparatus used for this evaluation. The test apparatus is configured by combining a roll-on-disk type rolling friction testing machine 510 (manufactured by Takachiho Seiki Co., Ltd.) and an electric furnace (not shown).

The roll-on-disk type rolling friction testing machine 510 is configured to have a peripheral surface of a glass conveyance roll (also simply referred to as "roll" hereinafter) 530 come into contact with the upper surface of a disk-shaped glass plate 520 that rotates in the circumferential direction. The roll 530 is configured to be rotatable in the circumferential direction, where the rotational axis direction is the same as the radial direction of the glass plate 520, and the roll 530 is configured to be movable back and forth in the rotational axis direction.

In the testing machine 510, the upper surface of the glass plate 520 and the circumferential surface of the roll 530 are brought into contact with each other, and when the glass plate 520 is rotated while a constant load is applied on the roll 530 in a direction from the center of the roll 530 toward the glass plate 520, the roll 530 rotates in conjunction with the rotation of the glass plate 520 to roll on the glass plate 520. Then, while rotating the glass plate 520, the roll 530 is moved along its rotational axis toward the center of the glass plate 520, and in this way, the roll 530 rolls while drawing a spiral friction mark on the upper surface of the glass plate 520. Also, in Experimental Examples 1 and 2, because the outer peripheral surface of the roll is arranged into an outwardly convex curved surface, the contact between the outer peripheral surface of the roll 530 and the upper surface of the glass plate 520 becomes a point contact, and the friction mark becomes linear. The testing machine 510 is accommodated within an electric furnace, and the atmospheric temperature of the testing machine 510 is controlled to a predetermined temperature.

As testing conditions, the atmospheric temperature was 600 °C, the load applied to the roll 530 was 500 gf, the radius of the glass plate 520 was 90 mm, the rotational speed of the glass plate 520 was 0.5 rps, the width of the friction mark (corresponding to the diameter of the point contact between the glass plate 520 and the roll 530) was 0.12 mm, and the spacing between the friction marks in the radial direction of the glass plate 520 (center-to-center distance between the friction marks in the width direction) was 0.125 mm.

In the following, specific test procedures and the individual results for the experimental examples are described.

First, the glass plate 520 and the roll 530 of each of the experimental examples were set up in the testing machine 510. The temperature of the electric furnace was raised to 600 °C while the glass plate 520 and the roll 530 were kept apart from each other.

After maintaining the temperature at 600 °C for 30 minutes such that the temperatures of the glass plate 520 and the roll 530 become sufficiently uniform, the peripheral surface of the roll 530 was brought into contact with the edge of the upper surface of the glass plate 520. Note that because the roll of Experimental Example 2 has a sodium sulfate film formed on its outer peripheral surface, the sodium sulfate film acting as a buffer layer was disposed between the glass plate 520 and the roll 530. In contrast, in Experimental Example 1, the glass plate 520 and the outer peripheral surface of the roll 530 came into direct contact with each other.

Then, while applying a predetermined load to the roll 530, rotation of the glass plate 520 in the direction of block arrow A shown in the figure and movement (axis feed) of the roll 530 in the axial direction indicated by block arrow B shown in the figure were started at the same time. The axis feed speed of the roll 530 was set up such that the spacing between the friction marks may be at a predetermined value. Once the roll 530 reached the center of the glass plate 520, the contact between the roll 530 and the glass plate 520 was released and the rotation of the glass plate 520 was stopped. Then the temperature within the electric furnace was gradually lowered so that the glass plate 520 would not crack, and the glass plate 520 was taken out after the temperature was lowered to room temperature. Note that in Experimental Example 2, when the glass plate 520 was taken out, it could be confirmed that the sodium sulfate film remained on the outer peripheral surface of the roll 530.

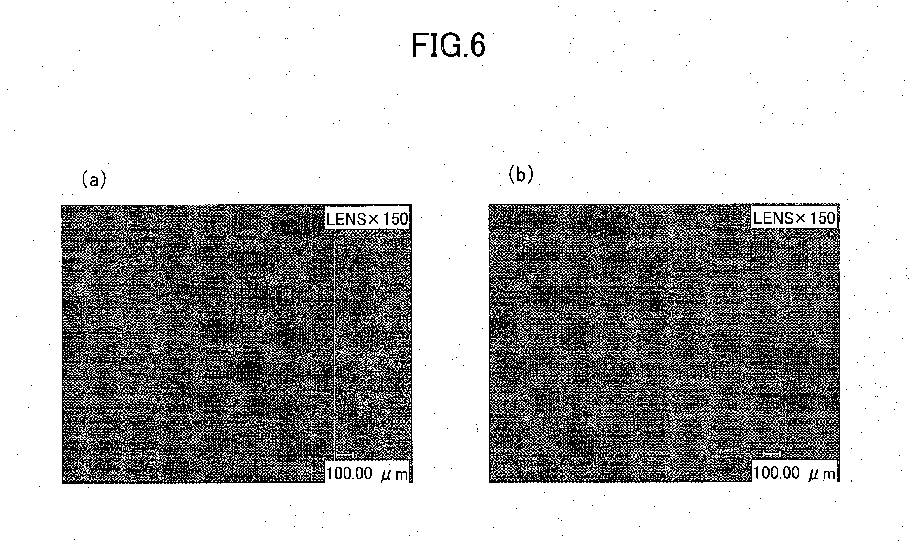

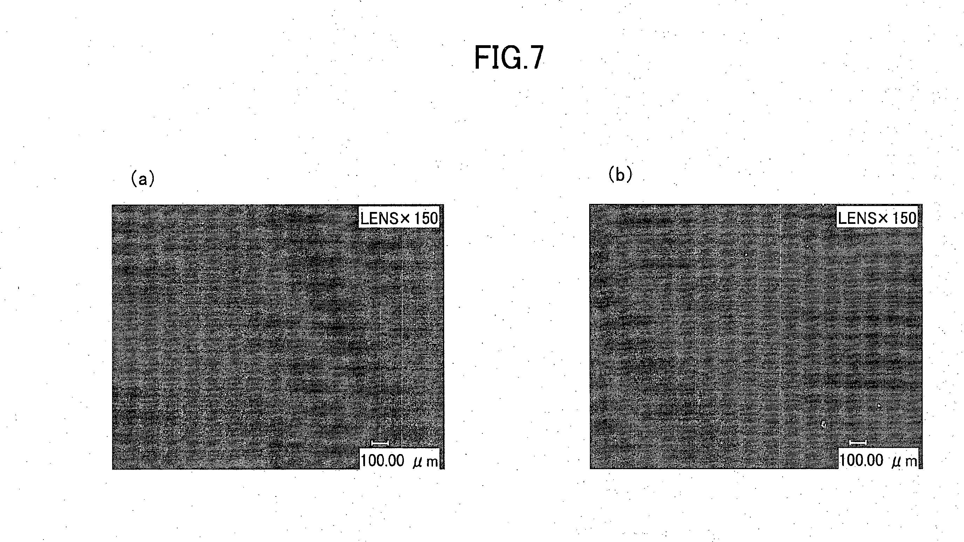

FIG. 6 (a) is a photograph of the outer peripheral side of the glass plate surface of Experimental Example 1; and FIG. 6 (b) is a photograph of the inner peripheral side of the glass plate surface of Experimental Example 1. FIG. 7 (a) is a photograph of the outer peripheral side of the glass plate surface of Experimental Example 2; and FIG. 7 (b) is a photograph of the inner peripheral side of the glass plate surface of Experimental Example 2. As can be visually appreciated, defects are more effectively suppressed in Experimental Example 2 which has the buffer layer as compared to Experimental Example 1 which does not have a buffer layer.

The extent of defect occurrence on the upper surface of the glass plate 520 obtained in the above manner was evaluated by the following method.

On the upper surface of the resulting glass plate 520, observation points were established at positions 20 mm and 80 mm from the edge toward the center in the radial direction. Then, images of 2.12 mm × 1.59 mm square size observation areas each having the above observation points as their centers were captured, and the defect occurrence rate of each observation area was calculated based on the area of defects existing in the captured image (observation area) and the total area of the captured image using the following equation (1).

$$\text{Defect Occurrence Rate (\%) = (Sum of Defect Area/Total Area of Captured Image)} \times 100 \cdots (1)$$

Table 1 indicates the results of measuring the defect occurrence rates of the glass plates obtained in the above manner in Experimental Examples 1 and 2. Note that in Table 1, the defect occurrence rate of the observation area with the observation point 20 mm from the edge as its center is represented as the defect occurrence rate of the outer periphery. Also, the defect occurrence rate of the observation area with the observation point 80 mm from the edge as its center is represented as the defect occurrence rate of the inner periphery.

As can be appreciated from Table 1, defects occurred at higher rates in Experimental Example 1, whereas in Experimental Example 2, at both the inner periphery and the outer periphery of the glass plate, the defect occurrence rates were suppressed to approximately 1/1000 as compared to Experimental Example 1. That is, it could be confirmed that by arranging a buffer layer between the roll and the glass plate, the occurrence of defects on the glass surface can be suppressed.

[Table 1]

|  | EXPERIMENTAL EXAMPLE 1 | EXPERIMENTAL EXAMPLE 2 |
|---|---|---|
| OUTER PERIPHERY | 9.7% | 0.003% |
| INNER PERIPHERY | 3.6% | 0.009% |

Although a glass production method and a glass production apparatus have been described above in detail and with reference to certain illustrative embodiments, the present invention is not limited to the embodiments described above, and numerous variations and modifications may be made without departing from the scope of the present invention.

The present application is based on and claims the benefit of priority of Japanese Patent Application No. 2012-252516 filed on November 16, 2012 and Japanese Patent Application No. 2013-011655 filed on January 25, 2013, the entire contents of which are herein incorporated by reference.

DESCRIPTION OF THE REFERENCE NUMERALS

| 12 | glass (glass ribbon) |
|---|---|
| 13, R1-R10, 21, R31-R34 | conveyance roll |
| 23 | buffer layer |

**Claims**

1. A glass production method comprising a forming step of forming a glass ribbon from molten glass by a glass forming means, and a conveying step of gradually cooling the glass ribbon to a temperature less than or equal to a strain point temperature of glass while conveying the glass ribbon by conveyance rolls;
   wherein the conveying step includes a buffer layer forming step of forming a buffer layer made of an inorganic salt by spraying a solution containing the inorganic salt directly onto at least a portion of the conveyance roll and causing the solution sprayed onto the conveyance roll to dry out.

2. The glass production method according to claim 1, wherein

the buffer layer includes a material that does not react with the glass ribbon at a temperature at which the glass ribbon is conveyed, the material having a Mohs hardness that is lower than a Mohs hardness of the glass ribbon.

3. The glass production method according to claim 1 or 2, wherein
the conveying step includes
a defect occurrence location detection step of detecting a defect in a glass that has been gradually cooled and identifying a defect occurrence location of the detected defect; and
a target roll identification step of identifying a target roll corresponding to the conveyance roll that has caused the defect; and
the buffer layer forming step includes forming the buffer layer within a buffer layer forming region including a portion of the target roll identified by the target roll identification step corresponding to the defect occurrence location detected by the defect occurrence location detection step.

4. The glass production method according to claim 3, wherein the buffer layer forming region corresponds to a range extending at least $\pm$ 50 mm in an axis direction of the target roll beyond the portion corresponding to the defect occurrence location.

5. The glass production method according to claim 3 or 4, wherein
the conveying step includes a protective layer forming step of blowing $SO_2$ gas on a glass ribbon surface facing the conveyance rolls and forming an anti-defect protective layer on the glass ribbon surface; and
the target roll identification step includes identifying the target roll from the conveyance rolls that are arranged within 3 m from an exit port of the glass forming means.

6. The glass production method according to any one of claims 1 to 5, wherein the buffer layer includes a carbonate and/or a sulfate.

7. The glass production method according to any one of claims 1 to 6, wherein the buffer layer includes a water-soluble substance.

8. The glass production method according to any one of claims 1 to 7, wherein the buffer layer includes sodium sulfate.

9. A glass production apparatus comprising:

a float bath that forms a glass ribbon on molten metal;
a dross box arranged adjacent to the float bath and including lift-out rolls that lift out the glass ribbon; and
an annealing furnace arranged adjacent to the dross box and including a conveyance roll having a buffer layer formed by drying a solution containing an inorganic salt, the annealing furnace being configured to gradually cool the glass ribbon to a temperature less than or equal to a strain point temperature of glass while conveying the glass ribbon by the conveyance rolls.

# FIG.1

# FIG.2

# FIG.3

# FIG.4

```
              START

                │
                ▼
                                  ⟋S41          DEFECT
          ╱          ╲                          UNDETECTED
        ╱   DEFECT     ╲
      ◁  OCCURRENCE LOCATION  ▷────────────┐
        ╲  DETECTION STEP   ╱              │
          ╲              ╱                 │
                │                          │
          DEFECT DETECTED                  │
                │                          │
                ▼         ⟋S42             │
      ┌──────────────────────────┐         │
      │        TARGET ROLL        │        │
      │   IDENTIFICATION STEP     │        │
      └──────────────────────────┘         │
                │                          │
                ▼         ⟋S43             │
      ┌──────────────────────────┐         │
      │  BUFFER LAYER FORMING STEP │       │
      └──────────────────────────┘         │
                │                          │
                │◀─────────────────────────┘
                ▼
              END
```

# FIG.5

# FIG.6

# FIG.7

(a)

(b)

LENS× 150

100.00 μm

LENS× 150

100.00 μm

EP 2 921 460 A1

<table>
<tr><td colspan="2" align="center">**INTERNATIONAL SEARCH REPORT**</td><td>International application No.<br>PCT/JP2013/080941</td></tr>
</table>

**A. CLASSIFICATION OF SUBJECT MATTER**
*C03B18/02*(2006.01)i, *C03B25/08*(2006.01)i

According to International Patent Classification (IPC) or to both national classification and IPC

**B. FIELDS SEARCHED**

Minimum documentation searched (classification system followed by classification symbols)
C03B17/00-17/06, C03B18/00-18/22, C03B23/00-35/26

Documentation searched other than minimum documentation to the extent that such documents are included in the fields searched
Jitsuyo Shinan Koho  1922-1996 Jitsuyo Shinan Toroku Koho 1996-2014
Kokai Jitsuyo Shinan Koho 1971-2014 Toroku Jitsuyo Shinan Koho 1994-2014

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2002/051767 A1 (Nippon Sheet Glass Co., Ltd.),<br>04 July 2002 (04.07.2002),<br>claims; fig. 9 to 11<br>(Family: none) | 9<br>1-8 |
| A | WO 2009/014028 A1 (Asahi Glass Co., Ltd.),<br>29 January 2009 (29.01.2009),<br>claims; fig. 1, 2<br>& CN 101754937 A  & KR 10-2010-0043192 A<br>& TW 200911707 A | 1-9 |
| A | WO 2008/120535 A1 (Asahi Glass Co., Ltd.),<br>09 October 2008 (09.10.2008),<br>claims; fig. 1, 2<br>& CN 101652329 A  & TW 200906743 A | 1-9 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br> 04 February, 2014 (04.02.14) | Date of mailing of the international search report<br> 18 February, 2014 (18.02.14) |
|---|---|
| Name and mailing address of the ISA/<br> Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2013/080941 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2011/158810 A1  (Asahi Glass Co., Ltd.), 22 December 2011 (22.12.2011), claims; fig. 1 & EP 2584346 A1          & CN 102947694 A & TW 201200481 A | 1-9 |

Form PCT/ISA/210 (continuation of second sheet) (July 2009)

# EP 2 921 460 A1

**Patent documents cited in the description**

- WO 2009148141 A
- WO 2002051767 A
- JP 2011121834 A
- JP 2011251893 A
- JP 2009227471 A
- WO 2009014028 A
- JP 2012252516 A
- JP 2013011655 A